# EUROPEAN PATENT SPECIFICATION

(11) **EP 2 643 825 B1**
(45) Date of publication and mention of the grant of the patent: **27.01.2016**
(21) Application number: 11790651.1
(22) Date of filing: 22.11.2011
(51) Int. Cl.: G08B 7/06, G08B 29/10

(54) **EMERGENCY GUIDANCE DISPLAY**
NOTFALLANWEISUNGSANZEIGE
AFFICHAGE D'AIDE EN CAS D'URGENCE

(30) Priority: 22.11.2010 GB 201019670; 29.11.2010 GB 201020118; 08.12.2010 GB 201020804; 25.01.2011 GB 201101266; 16.02.2011 GB 201102678; 16.03.2011 GB 201104398; 05.04.2011 GB 201105759; 06.04.2011 GB 201105795; 12.04.2011 GB 201106164; 16.05.2011 GB 201108077; 13.06.2011 GB 201109877; 27.06.2011 GB 201110685; 28.06.2011 GB 201110983; 04.07.2011 GB 201111358; 06.07.2011 GB 201111558; 11.07.2011 GB 201111784; 11.07.2011 GB 201111824; 18.07.2011 GB 201112309; 26.07.2011 GB 201112768; 21.10.2011 GB 201118154
(43) Date of publication of application: 02.10.2013
(73) Proprietor: Lumenox Limited, Stratford Upon Avon Warwickshire CV37 9NQ (GB)
(72) Inventor: WHORROD, Robert, Stratford upon Avon Warwickshire CV37 9NB (GB)
(74) Representative: Bridge-Butler, Jeremy
(86) International application number: PCT/GB2011/001636
(87) International publication number: WO 2012/069782

(56) References cited:
- EP-A2- 2 148 306
- WO-A1-02/16826
- WO-A1-2005/122102
- WO-A1-2009/151166
- WO-A1-2009/153393
- WO-A1-2010/105825
- WO-A2-2005/079328
- DE-A1- 3 630 373
- DE-A1- 10 200 342
- FR-A1- 2 896 993
- US-A1- 2004 119 587
- US-A1- 2006 226 970

## Description

The present invention relates to an emergency guidance display for use particularly, but not exclusively, in a specialised hazardous environment such as an off-shore oil platform, a ship or an industrial process plant.

Emergency guidance systems which can direct people along particular paths through a building according to the location of danger therein are known. WO2010054794, in the name of Patterson, teaches a route guidance system for guiding occupants of an enclosed space to a location, such as an exit. The system comprises a network of interconnected nodes located at spaced locations throughout the enclosed space, at least some of which can convey route guidance instructions. Each node comprises a control unit and a communication means to allow it to communicate with adjacent nodes, so information and/or instructions can be passed between them. This networked system allows for escape routes to be formulated according to commands issued from any point therein, for example from the point where a fire is detected, or from the point where the destruction of adjacent nodes is detected. The guidance instructions can be in a number of different forms, including illuminated signs, as well as projected images and beams. The nodes can comprise, or be associated with, sensors which can detect fire, smoke or reduced visibility, in order to determine the location of danger, and also sensors which can detect people or their movement, in order to determine their location. This can allow some people to be directed away from a crowded area and along an alternative escape route. RFID tags can also be recognised, to determine the identity or nature of a particular person, for example a fire fighter. The system also has a basic diagnostic control which allows the health of the system to be tested.

One of the key features of this known system is that it is autonomous from any other system in the building, for example the utility power (ring circuit) and/or the lighting circuit and so on. This ensures it can operate in isolation, but it also makes it an additional installation in the building, requiring an entire component set, and discreet communications and power routing. The power also has to be uninterruptable in nature.

A very similar prior art example is shown in WO2009054584, in the name of Seoul National University Industry Foundation. Both of these prior art examples suffer from a number of drawbacks.

Firstly, in both cases the systems are intended for use in regular commercial or public buildings, and there is no consideration for the very specific requirements for use in a hazardous environment. These not only include the very specific requirement for any power and communications to be rendered safe according to IEC60079 standards, but also for devices to be able to withstand extreme outdoor weathering and/or submerging in water, and for the infrastructure to be minimalised and simplified to save on implementation and maintenance costs and to reduce the risk of failure. To meet these requirements the cost, size, weight and complexity of each component and interconnection must be very different.

Secondly, the structure and lay-out of an industrial site is quite different to a regular building, and may include open gantries and stairwells, and large open spaces containing possibly hazardous equipment or materials. They often also include outdoor areas. Known illuminated signs, or the projected images or beams described in the prior art, would not be suitable in such environments. Furthermore, some industrial emergencies may require an alternative approach

Thirdly, in the context of an off-shore installation, ship or industrial process plant, which must feature standard lighting as well as emergency lighting and emergency beacons with uninterrupted power supplies, an entirely autonomous further system would be far too complex and costly to install.

Lastly, the known systems are programmed according to a number of fundamental assumptions, and in particular that personnel should be directed away from the point of the emergency, and out of the building (or to a pre-determined muster point) as quickly as possible. These assumptions are obvious for a regular building, but they may not be appropriate in an industrial setting. For example, regular buildings are generally surrounded by land to which it is safe to escape in an emergency, so routing people out of the building is appropriate. However, off-shore platforms, ships or large complex industrial process plants are different, and in the event of an emergency there may be nowhere else to go. Further, as regular buildings generally have a plurality of exits, the known systems assume they are available and continuously direct personnel to move towards them. Likewise, as fire generally spreads and intensifies, the known systems assume that continuous evacuation is best. The idea that personnel should remain where they are is not accounted for. However, in an industrial setting continuous movement of personnel could be dangerous. For instance, if there is a leak of toxic gas which is invisible and odourless, as opposed (or in addition) to a fire, the movement of personnel through the structure could be disastrous. Staying put, or moving up or down as opposed to laterally away from the emergency may be critical.

It is known to block a route using a particular signage, for example a red X, but this is not the same as an instruction to remain in a particular place. It might be possible with known systems to move personnel to a dead end with the intention that they remain there, but this would never be understood and would lead to distrust of the system and panic.

One further assumption in the prior art systems is that there will only by one emergency at a time, and as such they are not able to cope in the event of two separate events occurring simultaneously. If two emergencies coincide the prior art systems may direct personnel closer to a second emergency, or direct personnel to and from each one. If one of these emergencies were a visible fire and the other an invisible toxic gas, this would lead to clear confusion.

It is known from other fields to have animated directional displays made up of a line of light points, which are illuminated in sequence to give the appearance of a moving dot or arrow, which can indicate a direction to take. These are known as "chasers", and are used in aircraft, or in tunnels. One prior art example is sold under the name Swareflex (RTM). However, these systems have only ever been used to indicate a direction to take. They have also never been considered for use in an industrial setting with all its unique requirements. They are generally configured as long lengths of conduit, and comprise one controller so one failure results in a complete system failure. Furthermore, they are positioned at ground or floor level to avoid dense smoke higher up, however this requires dedicated fixtures and cable routing separate from that of associated emergency lights overhead.

WO 2005122102, in the name of Patterson, discloses an emergency lighting system comprising a plurality of light units arranged in lines, which can be illuminated in at least two different ways to display different directions. It particularly shows an "X" configuration of nine light points, which can be selectively illuminated to display an arrow head in one direction, an arrow head in the opposite direction, or an "X" to display a stop signal. However, these different displays are all static, and therefore not as visually arresting an as animated display like the chasers described above, and in addition there is no display which would correspond to a instruction for the viewer to remain in the location of the display, or to leave in any direction therefrom.

WO 2009 153393 discloses a method and a system for controlling guiding lights wherein sequentially arranged light sources are switched on and off to create an illusion of movement.

The present invention is intended to overcome some of the above problems.

Therefore, according to a first aspect of the present invention, an emergency guidance display comprises three or more light points arranged in a line and a control means, characterised in that the control means illuminates said light points sequentially from one end of the line to the other in a first mode of operation and sequentially in the opposite direction in a second mode of operation, in which said light points comprise two groups, and in which the control means illuminates the light points of each group sequentially along said line in opposite directions in a third mode of operation.

Thus, the present invention relates to a so-called Kinematic Optical Guidance System (KOGS) which uses a basic animated display to communicate commands. In the first two modes of operation the display illuminates the light points sequentially along the line, which has the appearance of a spot of light moving in a particular direction. These can be used as commands to move in one direction or another, and the meaning will be readily understood by any viewer. However, the third mode of operation is key, because it can be used as a command to stay put, which is absent from prior art designs and would find ready application in an industrial setting, as described above. Not only might staying put be safer than moving, but this command can also be used to prevent a bottleneck of personnel elsewhere, and it can also be used to create holding zones at any particular location, which might allow emergency personnel to locate an injured person.

The third mode of operation has the appearance of two spots of light moving in opposite directions. If they are made to move towards one another to a central point in the line, then again the meaning will be readily understood by any viewer, provided they were aware that staying-put was a command which might be given. It will be appreciated that with a display of only three light points this third command will not be particularly effective, as it will involve the two outer light points flashing sequentially with the centre one (the two groups referred to above each comprising one outer light point and the middle light point). However, with five light points or more the meaning becomes far clearer. In a preferred embodiment 16 light points can be used, and with such a number the animated message is very clear.

These modes of operation can also be performed in the negative by illuminating all the light points and sequentially switching off the light points, so the effect will be a moving point of non-illumination through a line of illumination. It will be appreciated that this is included with the scope of the first aspect of the invention.

The third mode of operation involves the use of the same line of light points as the first and second modes of operation, and advantageously does not involve any complex graphic, image or text.

In a preferred embodiment the control means can illuminate the light points of each group sequentially along said line in the reverse opposite directions in a fourth mode of operation. This mode of operation can be used to direct personnel to evacuate in any direction. Once again, the more light points in the line the clearer this message becomes, and the meaning of this animation will be readily understood by any viewer aware that such a command might be given.

All four modes of operation can be enhanced by having variable motion rates. An animation with a slow rate sequence can indicate a low severity, for example where walking to an exit or muster point might be appropriate, while an animation with a high rate sequence can indicate a higher severity. The speed of the animation works on the subconscious, and it will be perceived without training that a slow animation is indicative of an emergency which is not as critical as one accompanied by a fast animation.

It should be noted that in the present invention at any given point in time the emergency guidance display will not indicate anything, as only one, or two, LEDs will be illuminated. This is different to the prior art, in which guidance displays present a constant message. The present invention involves an animation through time. One of the advantages of this is that it involves movement, which can be perceived through peripheral vision without direct focus. This is different to the prior art, in which direct visual contact is required with the signage. So, in correct technical terms, the present invention is a time dependant space perceived motion affect or display, that can be understood as an instruction only over a period of time.

The light points can be generated by any known apparatus, for example light bulbs or an LED or LCD screen. However, preferably the light points can be LEDs, or clusters of LEDs. These light points can be focussed by one common focal lens, but preferably, the light points can each comprise a separate lens. These can be separate items, or separate lens sections of a common lens unit. These can be adapted to produce a beam of light of adequate diameter to be discerned from any adjacent beam. This feature enhances the discernability of the animation, because each beam of light will be clearly separate from the next. This may be critical in low light, or in smokey conditions.

Beams of this kind may have a narrow viewing angle, and in some cases it may be preferred to provide for the beams to be viewable from a wider angle. Therefore, in one embodiment each of lenses can comprise a plurality of sectors, each of which projects light emitted by said light point at a different angle. A main one of said sectors can emit a main beam, while further one or more of said sectors can emit secondary beams of a lower light intensity. With this arrangement the main beam of light can still have a strong intensity.

The lenses can also perform a further colouring function. For example, they may comprise a coloured filter, or gel, which absorbs light of a particular wavelength and emits light of a pre-determined colour, for example green or red. This would be applicable if the LEDs of the light points emitted white light, or light of a colour wavelength divergent from that required to be emitted.

The light points can comprise a first colour. The preferred colour for the above described directions is green, being the colour associated with positive instructions. However, either said light points can comprise one or more second colours or said display can comprises one or more second sets of light points comprising second colours. In a first mode category the control means can illuminate said light points in the first colour, and in one or more second mode categories the control means can either illuminate said light points in second colours or illuminate said second sets of light points. Therefore, the guidance display of the invention can be further enhanced to display any of the above described directions in more than one colour. This can change the intended meaning, or be used to indicate severity.

Diagnostics is an important part of any system in an industrial environment, and safety systems in particular. There are many known ways to provide system diagnostics in hazardous area electrical systems, including sensing failures in the electrical circuits, controllers, and power supplies, as well as sensing environmental failures such as water ingress, internal and/or external over/under temperatures, vibration or tampering. The emergency guidance display of the invention can feature any of these known diagnostics systems. (These can integrate with a site-wide power and communications system, as described further below). However, in a preferred embodiment the display can also comprise first optical sensor means adapted to separately detect the emission of light from two or more of said light points. If said first optical sensor means detects a light emission pattern divergent from the mode of operation of the control means, the control means can operate said light points according to a fifth mode of operation.

The first optical sensor means can perform their function simply by virtue of their positioning, whereby the correct illumination of one light point will product one reading, while the correct illumination of the next will produce a second reading, by virtue of its displacement in space from the sensor means. This can be performed with the emitted light, or with the reflectance from lenses. Alternatively, a plurality optical sensors can be used, which receive light from the light points via light guides. The first optical sensor means can operate during normal operation of the emergency guidance display, or it can operate during a test cycle performed at any time. The first optical sensor means can be used to test that the correct animation (mode of operation) is being performed, but it can also be used to test the brightness of the light points. The readings of the first optical sensor means (which can be analogue or digital) can be absolute readings, or they can be measured against a reference as relative readings, allowing for thresholds for correct operation to be established. The use of relative readings allows for compensation to be made in the reference for daylight or other environmental factors. The advantage of the optical sensor means is that the light points can be tested remotely without the need for visual contact to be made.

The readings of the first optical sensor means can be communicated to other systems, for example the main control or diagnostics system of a site-wide power and communications system, and/or they can be utilised by the control means of the emergency guidance display itself. In particular, and as referred to above, if the first optical sensor means detects a light emission pattern divergent from the mode of operation in question, the control means can operate said light points according to a fifth mode of operation. This fifth mode can be a failure mode in which one or more red LEDs can be flashed, for example. In addition, if the first optical sensor means does not detect any faults a further mode of operation can be performed to indicate this, for example one or more flashing or solid green LEDs. (Reference is made below to features which can recognise the presence of personnel in the vicinity of the emergency guidance display, and if such features are incorporated then further alternative modes of operation can be used to communicate the presence or otherwise of faults, for example flashing amber LEDs.)

In a preferred embodiment of the invention the display can comprise a main power supply and a backup power supply. The backup power supply can be an uninterruptable power supply charged by said main power supply. Further reference is made below to the manner in which the emergency guidance display can be powered in this way as part of a site-wide power and communications system.

The main power supply can be rendered safe according to the IEC60079 standard. Again, this is expanded upon in the descriptions below.

It will be appreciated that the emergency guidance display described above can be used in any environment. However, in a preferred embodiment it can be used in an industrial setting, where it can be integrated into existing power and communications systems. This integration leads to a host of further features.

Therefore, according to a second aspect of the present invention a multi-function lighting device comprises a main light emitting means, an emergency light emitting means, an emergency warning light emitting means and an emergency guidance display as claimed in any of claims 1 to 8.

Known industrial lighting systems comprise main lights, emergency lights and emergency warning lights. The main lights are generally overhead lights placed in pre-determined positions to provide the best lighting for normal operations. The emergency lights operate in the event of an emergency to provide general illumination. They can be provided by operating the main lights at a lower level of illumination, or they can be a separate set of lights specifically for this function. The emergency warning lights, which are sometimes referred to as beacons, are separate and mandatory flashing lights which indicate a particular kind of emergency. The emergency guidance display of the present invention must be additional to each of these systems.

The integration of the emergency guidance display of the invention with main lights, emergency lights and emergency beacons is a quite different approach to the prior art in which the emergency guidance displays are always separate. However, this integration is beneficial in an industrial setting with a requirement for hazardous area safety, because the infrastructure required to implement the invention can be significantly reduced, saving not only on the cost, but also on the potential points of failure which is a critical consideration.

This integration finds benefits in all areas of functionality. First of all, the main and emergency lights are positioned exactly where the beacons and the emergency guidance display will also need to be with no or little exception. Furthermore, in most cases they are located overhead or at eye level, which prevents passing bodies from obscuring the animated display. This can occur with the known systems, for example where messages are projected to the floor, or where the guidance is intentionally at a low level.

Secondly, second optical sensor means can be provided which detect the emission of light from said main light emitting means, said emergency lighting emitting means and said emergency warning light emitting means. These can work alongside the first optical sensor means referred to above, and the control means can either act on detected faults, or report them, as referred to below.

Thirdly, the same single power input or input and throughput power cables can be used. Therefore, in a preferred embodiment the main light emitting means, emergency light emitting means, emergency warning light emitting means and emergency guidance display can share the same main power supply and uninterruptable backup power supply. Such an integration of the power supplies is not considered in the prior art because in regular buildings the main lights may be de-energised during the day, so any integrated emergency attachment will also be de-energised. In an industrial setting the power to the main lights is continuous, and generally also comprises an uninterrupted backup, so these power supplies can also be used as appropriate to operate the emergency guidance display, as referred to above. The power supplies will also already be hazardous area protected for the main lights, emergency lights and beacons where this is required, so the same will apply to the emergency guidance display.

Fourthly, in addition to sharing the power supplies, the emergency guidance display can also share the same control interface as the main lights. This can be achieved in many ways, and from a hardware point of view this can be any of the known wired or wireless solutions which are used to control main lights, and from a software point of view this can be any of the known standards. Therefore, preferably the multi-function lighting device can comprise a wireless communications interface.

Lastly, the same physical enclosure can be used, allowing for a single multi-function lighting device in which all the functions are protected together from environmental hazards.

In one embodiment of the invention the light points of the emergency guidance display can be separate from said light emitting means, emergency light emitting means and emergency warning light emitting means. However, in an alternative embodiment the light points of the emergency guidance display can comprise light points of said light emitting means and/or said emergency light emitting means and/or said emergency warning light emitting means. In other words, the integration of the components can go a step further, and the lighting device can comprise LEDs which perform more than one function. In particular, the main lights can comprise a line of LEDs which provide illumination in normal conditions, but which switch to becoming the emergency guidance system in the event of an emergency.

Following on from the second aspect of the invention, it will be appreciated that the multi-function lighting device thereof can form a part of a wider systems infrastructure like that provided in an industrial setting. Therefore, according to a third aspect of the invention a lighting system comprises a power supply, a power circuit, a system control means, a communications circuit comprising a plurality of radio transceivers, and a plurality of multi-function lighting devices as claimed in any of claims 9 to 14, in which the plurality of multi-function lighting devices are connected to said power circuit, and in which each multi-function lighting device is connectable wirelessly to the communications circuit via a radio transceiver.

Once again, integration leads to benefits in certain areas of functionality. For example, the wireless interface between the lighting device and the communications circuit can allow the lighting device to wirelessly interface with other wireless components in its vicinity. This could take the form of a beneficial reception of data from local sensors, such as a smoke detector, or it could take the form of a beneficial transmittal of data, for example to an audible alarm device. It can also take the form of wireless communication between the multi-function lighting devices themselves, allowing for a node-like logic between devices to be implemented, as taught in the prior art, although this is not preferred. (It will be appreciated that such a node-like logic can also be implemented between the devices through the communications circuit, and/or via the system control means.) It also allows for the lighting devices to be used as repeaters or gateways for normal system data traffic.

Further, the incorporation of the lighting devices into the power and communications infrastructure allows for them to be directly controlled by the system control means, in coordination with all the other systems in the plant with which it can be integrated. These include the mandatory fire and gas alarm system and the safety shut down systems, so the guidance display can be made to work in concert with them or be orchestrated by them. It also includes the diagnostic and maintenance systems, so the lighting devices can be monitored for faults alongside every other component, and be included in standard maintenance procedures. Furthermore, this level of integration also allows the emergency guidance display to be partially or fully manually controlled through a human machine interface (HMI), as required. As the communications backbone of site-wide systems like those referred to above reaches out into the field, it is also possible to control the emergency guidance display from any point in the field. These advantageous features allow a level of enhanced functionality which is a far cry from the simple and autonomous prior art systems.

It should be noted here that an integrated arrangement like this allows for a great deal of flexibility in the way the lighting system can be controlled in an emergency situation, and the manner in which it can be set-up will be up to the end user. Firstly, it can be directly controlled by the system control means, autonomously of any fire and gas alarm system or emergency shut down systems, so there is no direct control, decision or interlock with or from other systems. This maintains the integrity of the system in the field. However, it is also possible to allow for there to be a level of interconnectivity and programmed decision making between the various systems, and their separate components, if desired. For example if communications from the system control means are lost, but data from local fire detection instruments indicates that a fire has spread in a new direction, cutting off an escape route a lighting device is directing personnel towards, a lighting device can be programmed to act on that data, and change its animated display, or revert to a default display.

In a preferred embedment the multi-function lighting devices can also be connected to the system control means using cables. Therefore, the communications circuit can further comprise one or more wired sections, and one or more multi-function lighting devices can be connected to said system control means and/or to other multi-function lighting devices via one of said one or more wired sections. This allows for a degree of flexibility in the installation, and also for a degree of redundancy if desired.

In a preferred embodiment the lighting system can further comprise a plurality of personnel tags, each multi-function lighting device can comprise a unique identity and a tag identification means, and said system control means can comprise a site map comprising known locations for each unique multi-function lighting device identity. Identification of personnel tags by said tag identification means can be communicated to the system control means in order to locate said personnel tag on said site map.

Therefore, the lighting system of the invention can form a personnel identification and tracking system, which can be useful in an emergency to direct particular personnel in desired directions using the emergency guidance display, or to simply account for personnel on site during an emergency.

Each multi-function lighting device can also comprise a motion detection means, and detection of motion by said motion detection means can be communicated to the system control means in order to locate moving personnel on said site map. This extra system can be used instead of, or in conjunction with the tag identification described above.

With this lighting system if the above described optical sensor means of the emergency guidance display detects a light emission pattern divergent from the mode of operation of the control means, the control means can communicate this to the system control means. This allows for lighting system wide diagnostics to be performed.

The invention can be performed in various ways, but five embodiments will now be described by way of example, and with reference to the accompanying drawings in which:
Figure 1 is a diagrammatic view of a multi-function lighting device according to the second aspect of the invention, which incorporates an emergency guidance display according to the first aspect of the invention;
Figure 2 is a table showing the modes of operation of the multi-function lighting device as shown in Figure 1;
Figure 3 is a perspective view of the multi-function lighting device as shown in Figure 1;
Figure 4 is a diagrammatic view of a lighting system according to the third aspect of the present invention;
Figure 5 is a diagrammatic view of a the lighting system shown in Figure 4;
Figure 6 is a diagrammatic view of the lighting system shown in Figure 4;
Figure 7 is a diagrammatic view of the multi-function lighting device as shown in Figure 1;
Figure 8 is a diagrammatic view of an instrument associated with the multi-function lighting device as shown in Figure 1;
Figure 9 is a diagrammatic view of a second multi-function lighting device according to the second aspect of the invention, which incorporates an emergency guidance display according to the first aspect of the invention;
Figure 10 is a diagrammatic view of a third multi-function lighting device according to the second aspect of the invention, which incorporates an emergency guidance display according to the first aspect of the invention;
Figure 11 is a diagrammatic view of a fourth multi-function lighting device according to the second aspect of the invention, which incorporates an emergency guidance display according to the first aspect of the invention; and
Figure 12 is a perspective view of a fifth multi-function lighting device according to the second aspect of the invention, which incorporates an emergency guidance display according to the first aspect of the invention.

The following description refers to a multi-function lighting device 4 according to the second aspect of the invention, which incorporates an emergency guidance display according to the first aspect of the invention; as well as to a lighting system according to the third aspect of the invention comprising a plurality of said devices 4. The various features of the device 4, and they way they integrate with the lighting system, are described in turn, rather than a full description of the device 4 being given before a full description of the lighting system. Therefore, the following description provides support for all three aspects of the invention at once.

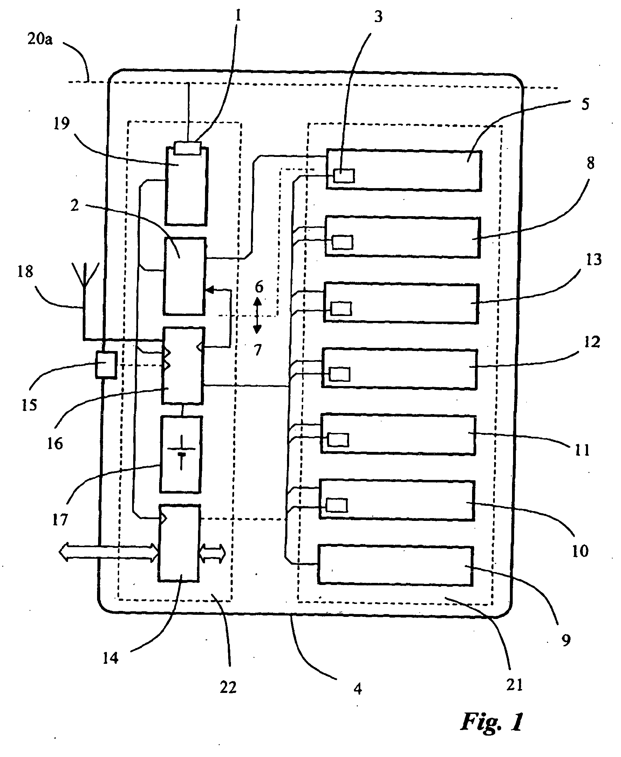

As shown in Figure 1 a multi-function lighting device 4 comprises a main light emitting means, in the form of main light sector 5, an emergency light emitting means, in for form of emergency light sector 10, an emergency warning light emitting means, in the form of emergency beacons 11-13, and an emergency guidance display, in the form of kinematic optical guidance system (KOGS) 8. This comprises three or more light points, in the form of 16 LEDs, arranged in a line and a control means, in the form of control processor 16. As described further below, the control means (16) illuminates said light points (8) sequentially from one end of the line to the other in a first mode of operation and sequentially in the opposite direction in a second mode of operation. Further, said light points (8) comprise two groups, and the control means (16) illuminates the light points (8) of each group sequentially along said line in opposite directions in a third mode of operation.

The device 4 is connected at 1 to a power source 20a. This power source 20a is rated safe for use in Zone 1 environments.

The power is connected to a distribution unit 19, which is suitable for Zone 1 operation when powered by the power source 20a, and for Zone 0 operation when isolated from the power source 20a, for example if it is cut or isolated. A uninterruptable backup power supply is provided for such instances in the form of battery 17 (which can have its own regulator if necessary). The distribution unit 19 is effectively integrated within each discrete component of the device 4 because they are daisy chained together. This is achieved with bi-pinned connectors with fasteners. These can only be disconnected live when gas clearance is given, because any arcing will not lead to ignition in the absence of a fuel. If gas clearance is not given then the power source 20a must be powered down before any connector can be disconnected. The power supplied to the device 4 is designed to support at least the emergency light sector 10, the beacons 11-13, the KOGS 8 and the control processor 16.

The distribution unit 19 supplies power to a main light power supply 2, which is fed to the main light sector 5. The main light power supply 2 is controlled by the control processor 16, which can execute a simple on-off control command, as well as a dimming command. Both the main light power supply 2 and the control processor 16 are suitable for Zone 1 or 2 operation when powered by the power source 20a, and for Zone 0 operation when isolated from the power source 20a.

The control processor 16 can illuminate the main light sector 5 anywhere from 0% (off) to 100% (fully on) according to how it is programmed. In a normal mode of operation it illuminates the main light sector 5 a 0% if it is in receipt of an off command, and at 100% if it is in receipt of an on command. It can also be commanded to illuminate the main light sector 5 at different levels during transitional periods between night and day, when fully on or off is not ideal. The control processor 16 can be programmed such that when it is in receipt of a command to switch to emergency lighting levels it illuminates the main light sector 5 at 10%. If such a command is received while the main light sector 5 is on at 100%, the control processor 16 can dim the main light sector 5 to 10% over a period of 5 seconds. This prevents a temporary visual 'black out' for personnel caused by an abrupt transitional light change. This transitional rate change can also be applied at an equivalent illumination to time ratio when the main light sector 5 is dimmed from less than 100% down to 10%. However, alternatively the control processor 16 is programmed not to use the main light sector 5 as an emergency light in this way, and instead to use emergency light sector 10, which is expressly for this purpose.

The components within the device 4 are divided into those which are suitable for Zone 1 or 2 operation when powered by the power source 20a and for Zone 0 operation when isolated from the power source 20a, and those which are always suitable for Zone 0 operation. This is indicated in Figure 1 by a hashed line, with those above, as indicated by arrow 6 being of the first kind, and with those below, indicated by arrow 7 being of the second kind. As such, operation of the main light sector, in a non-emergency situation is in accordance with Zone 1 or 2, while operations in emergency situations are in accordance with Zone 0.

The main light sector 5, the KOGS 8, the beacons 11-13 and the emergency light sector 10 all comprise LEDs as the light sources. LEDs are used because they offer the greatest efficiency and controllability. They also allow for clear colour definitions, and for multiple colours in one unit using tri-colour LEDs if desired.

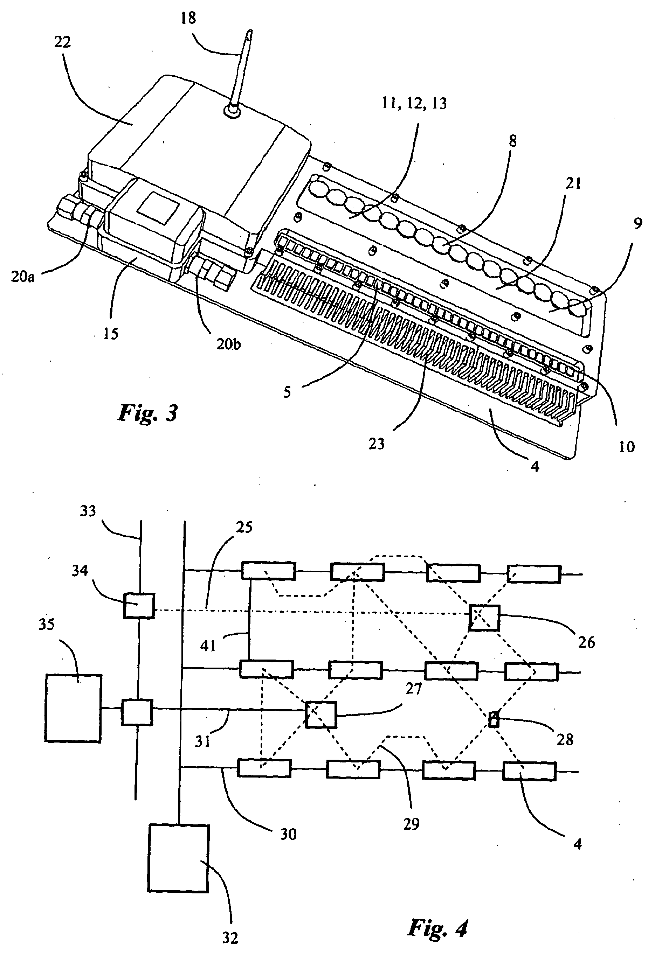

The KOGS 8 comprises green LEDs (which can be green, white with a green filter, or the green part of a tri-colour LED). Green is chosen because it is the recognised colour for exit route indication, and because it is at the human eye's peak sensitivity. The KOGS 8 comprises 16 LEDs arranged in a line, as illustrated in Figure 3. The device 4 further comprises blue beacon 11, yellow beacon 12 and red beacon 13, as well as emergency light sector 10. These comprise clusters of LEDs which can be of these particular colours, white with appropriate filters, of be derived from tri-colour LEDs. These are also controlled by the control processor 16, and powered from the power source 20a and/or the battery 17.

The beacons 11-13 are a separate optical system to the KOGS 8, and are compliant with the necessary PFEER (Prevention of Fire and Explosion and Emergency Response) requirements. The term "beacon" is known in the industry as a light which flashes at one fixed point, in accordance with the relevant standards of the site, and which has no other function. Therefore, when operated by the control processor 16 the beacons 11-13 flash at the required rate and/or mark-space ratio and/or intensity and/or beam angle. These parameters are adjustable to meet the particular site or national standards, or the situation. In an emergency the beacons should flash at a rate of 1Hz to 2Hz at an intensity of 300 Cd to 400 Cd singularly or collectively. They can also be used to indicate other situations such as when maintenance is being performed and personnel should keep way, or when a process alarm or shut-down has occurred which could be a precursor to an emergency. In these situations the beacons can be turned solidly on, or made to flash at a long interval. In this industry, a red beacon signifies gas or vapour detection, while yellow signifies a fire or general alarm. Some companies employ a blue beacon flashing a specific rate and/or intensity and/or mark space ratio and so on, to signify toxic gas release, and as such a blue beacon is also included.

The control processor 16 is wireless embedded, and is controlled remotely via a radio link, comprising external antenna 18. (It can also be controlled through a copper or optical cable if desired, via input 15, which provides the option for increased system integrity and redundancy. A wireless or radio transceiver adapter can also be connected to the input 15 to provide the communications link.) This allows the device 4 to integrate with a lighting system according to the third aspect of the present invention. Specifically, it receives operational commands from a centralised or distributed system control means, and/or potentially from a fire and gas system and/or from an emergency shut down system, for example a PLC, SIS, DCS or PC.

The device 4 also comprises an additional input/output power and/or communications interface 14, which allows it to connect locally to other on-site systems and instruments at a lower level. This can be used to connect to external instruments to receive data and possibly also power, or to connect to external instruments, including other devices 4, to control them or to provide power, either from the power source 20a or the battery 17. Any output from the interface 14 can be Zone 1 or 2 when powered by the power source 20a, or Zone 0 when powered by the battery 17.

Either the wireless interface 18 or the hardware interface 14 can be used to control additional local components in all kinds of ways, as required on site. This can include controlling external lighting devices, audible alarms or access control systems such as door solenoids or magnetics. They can also be used to receive relevant data during an emergency, for example from air speed and direction sensors, which could be used to change the mode of operation. For example, if it is known that there is a fire to the right of a device 4, and it is presenting an animation direction personnel to the left accordingly, then the receipt of data indicating wind in a right to left direction can prompt the control processor 16 to speed up the animation to increase the level of urgency. Further, if light switches or pressure switches are connected to the interface 14 it can be determined if personnel are in the vicinity of the device 4. These are examples of ways in which the device 4 can operate at a basic autonomous local level within a lighting system.

In addition, the wireless interface 18, and/or the hardware interface 14 can be used as data gateways for other non-associated instruments in a site-wide control system. This offers a cost-effective cable infrastructure, because lighting is always in the vicinity of instruments.

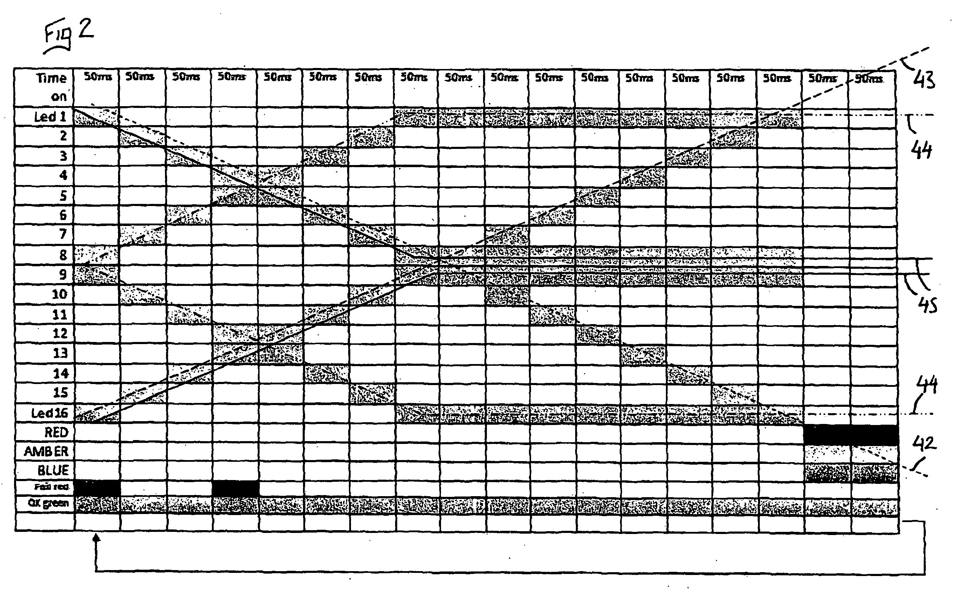

The KOGS 8 has several modes of operation, which each involve an animated display of one or more moving dots, created by sequentially switching on the LEDs in order along the line. These modes of operation are controlled by the control processor 16, and are illustrated in the table of Figure 2. In this table the first 16 rows relate to the 16 LEDs of the KOGS, and the next three rows relates to the beacons 11-13. Each column relates to 0.05 seconds in time, and where boxes are filled this illustrates than an LED is illuminated during the time frame of that column.

Firstly, the LEDs are illuminated sequentially from one end of the line to the other in a first mode of operation and sequentially in the opposite direction in a second mode of operation, as shown by lines 42 and 43 in Figure 2. As such, the dot appears to indicate one or other route to take in an emergency. This direction can be changed to the other by the control processor 16 at any time, according to instructions it receives in use. Furthermore, the control processor 16 can control the speed it sequentially illuminates the LEDs, so it can be faster or slower than illustrated in Figure 2, so the apparent movement of the dot can be increased or decreased in speed to indicate the severity of the emergency.

In a third mode of operation the LEDs are divided into two groups of 8 (LEDs 1-8 and 9-16 as shown in Figure 2), and the control processor 16 illuminates the LEDs of each group sequentially along the line in opposite directions, as shown by lines 45 in Figure 2. This creates the appearance of two dots starting at opposite ends of the line, which meet in the middle. This can be readily understood as an instruction to approach the device 4 and remain in its vicinity. As is clear from Figure 2, the final LED of each group which is illuminated is held on for a delay period of 0.45 seconds, to enhance the animation, and reinforce the notion that personnel should remain stationary.

In a fourth mode of operation the control processor 16 illuminates the LEDs of each group sequentially along the line in reverse opposite directions, as shown by lines 44 in Figure 2. This creates the appearance of two dots starting in the middle, and moving to the opposite ends of the line. This can be readily understood as an instruction to move away from the device 4 in any direction. Again, the final LED of each group is held on for a delay period of 0.45 seconds to reinforce the meaning of the animation.

In further modes of operation, which can be used to give further pre-determined instructions, the control processor 16 can strobe-all the LEDs, or alternately strobe the two groups. It can also illuminate the LEDs cumulatively to give the appearance of a bar increasing in size, although this will consume more power than the animated dot type animation. It will be appreciated that with 16 LEDs there are many different kinds of animation which can be created in addition to those which are described. Further, it will also be appreciated that the circuitry required to allow the control processor 16 to operate LEDs in this fashion is very straight forward, and will not therefore be described further here. Further animations can also be employed to convey fault conditions. It is also possible to employ the KOGS 8 for non-emergency guidance, by routing personnel to specific areas of a plant without the need for maps or prior knowledge. The same first and second modes of operation can be used to direct personnel in this way, but it will be appreciated that this functionality will be secondary to the emergency routing of personnel.

Figure 3 shows the physical configuration of the device 4, and the same numerals used in Figure 1 are used for the components here. There is a cable gland entry for the power source 20a cable, and another 20b for through power, so daisy chaining is possible, rather than the device 4 being a 'dead-end'. Optical aperture 21 comprises the KOGS 8 and the beacons 11-13. The 16 LEDs of the KOGS are visible, and each one comprises a separate lens, designed to emit a beam with an angle such that it is discernable from the beams emitted by the neighbouring LEDs. The LEDs of the beacons 11-13 are housed behind a glass panel. The LEDs of the main light sector 5 and the emergency light sector 10 are arranged below the optical aperture 21. A thermal management means 23 is provided to prevent over-heating. The various electronic control systems 22 are mounted in a protected compartment with a lid.

The device 4 is intended to operate in a lighting system according to the third aspect of the present invention, comprising a system control means and a plurality of devices 4, and such a system is shown in Figure 4. This lighting system comprises a system control means 35, which is a processor programmed to operate the various devices 4 of the lighting system according to a set of emergency protocols bespoke to the installation in question. In particular it is provided with a database of information about the lay-out of the site and the location of the devices 4 within it, and with sub-programs which calculate escape routes according to the location of one or more detected emergencies, which can be different in nature, i.e. fire or gas leak. In a detected emergency commands are sent to each device 4 according to this programming. The system control means 35 can be separate from other control means at a particular site, but it will be appreciated that in practice it is more efficient and effective to integrate it with such systems as part of wider control structure software. As such, the system control means 35 can simply be a computer program operating within a main computer, or complex of computers.

Figure 4 illustrates that the system control means 35 is connected to a system backbone 33 (which can be a separate system just for the lights, but in practice will be the backbone for the instruments system on site). The system backbone 33 has interfaces 34 used by the lighting system. Connected to these interfaces 34 are illustrative examples of wireless gateways 26 and 27. Gateway 26 is wirelessly connected to an interface 34, as shown at 25, while gateway 27 is connected to an interface 34 by a cable 31. These are alternative solutions, which can be selected according to the best approach at any on-site location. As shown by the illustrative hashed lines 29 in Figure 4, the various devices 4 can wirelessly connect to gateways 26 or 27, and with each other in order to reach one of the gateways 26 or 27 or to communicate commands. Furthermore, Figure 4 also gives an illustrative example of a device 28 separate from any of the devices 4, which can be any instrument, auxiliary device or RFID tag and so on, which can also be wirelessly connected to any of the devices 4. In addition, Figure 4 also shows how two devices 4 can be connected together with a cable 41, if that is required. Power lines 30 provide the devices 4 with power along a plurality of daisy chains. The power comes from a distribution room 32.

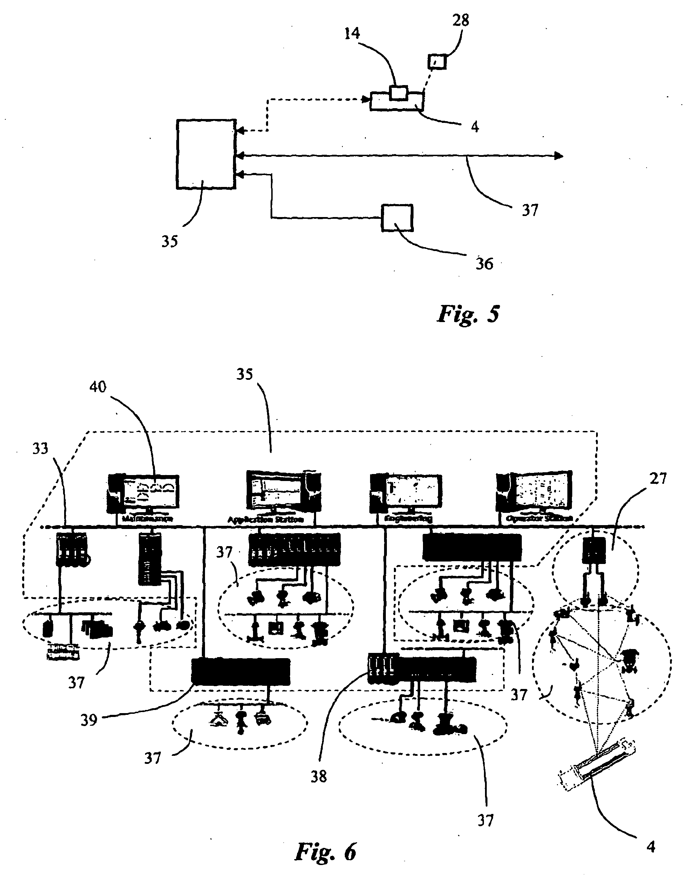

As described above, a lighting system according to the third aspect of the invention can be set up to have only a centralised control structure, in which there is no interaction between the devices 4 of the lighting system and other emergency systems in a plant, or it can be set up to have a certain degree of interaction with other systems. Figure 5 shows how an autonomous structure works, with the system control means 35 receiving data from a fire and gas detection instrument 36, and then issuing a command at 37 to a relevant instrument, for example a shutoff valve. (The system control means 35 here being a site-wide control means.) At no point is the data from the instrument 36 fed directly to a device 4. However, upon receipt of the data from the instrument 36 the system control means 35 sends a command to the device 4, as shown. This command is specific to the event in question, for example it may require an evacuation, or it may simply require an emergency beacon to be illuminated. Therefore, the device 4 is only controlled according to the programming of the system control means 35, and it does not react to data coming from elsewhere. The device 4 can interact with particular local instruments that form a part of its own system however, like sensor 28. This can be an RFID tag, or a diagnostic instrument of some kind.

Figure 6 illustrates further how a lighting system of the invention can operate autonomously of other systems at a site, while still being integrated into the site's system architecture. The illustrative device 4 is connected to a wireless port 27, along with other unrelated or related instruments 37. The wireless port 27 is connected to the system backbone 33. Other entire systems like a safety instruments (fire and gas leakage alarm) system 38 and an instrument control system 39 are also connected to the backbone 33. These comprise a control device and instruments 37 connected thereto. The system control means 35 is a distributed system, in that it comprise a number of separate interfaces 40, which may be in different locations. Each one of these interfaces can be used to control or monitor any of the systems connected to the backbone 33. Furthermore, the control algorithms for the device 4 can also be performed by the control centres of the other systems 38 and 39, was these are also connected to, and form a part of, the system backbone 33. However, as referred to above, at no point do any of the instruments 37 pass data directly to the device 4 for control decisions to be made therein. It should be noted that not only do the devices 4 not take commands from other instruments 37 forming parts of other non-associated systems, they also do not take commands from each other (although they can transmit command data from the system control means to one another.)

However, the autonomy of the lighting system does not apply to data it sends back to the system control means 35. In other words, other systems, like the fire and gas alarm 38 or the instrument control systems 39 are not autonomous of the lighting system. Diagnostic or detection data sent from the devices 4 to the system control means 35 is sent to pre-determined other systems where it can be factored into control algorithms. Further, the data sent by the devices 4 can be directed to particular other relevant systems for processing. For example, diagnostics data can be sent to maintenance terminals, or presence detection data may be sent to security terminals. In addition to this, as the devices 4 of the lighting system are integrated into the site system, they can be used as access points to introduce commands into the site system intended for unrelated instruments. The wireless mesh of the lighting system effectively becomes an access point for HMI systems associated with the control instrumentation or the emergency shut down and fire & gas instrumentation.

The integration of the lighting system into a site system backbone 33 also allows for it to be accessed far more easily than in the prior art. In the known systems the "backbone" is the network of devices itself, which can only be accessed by connecting directly to one of the devices. This is only really a low level system with no higher operating system. In the arrangement shown in Figure 5 the wireless mesh between the devices (illustrated in Figure 3) is an equivalent low level system, while the system backbone 33 is a high level system with easy fast access.

The centralisation of control in the lighting system of the invention has several advantages over the prior art, in which devices in a system can become controllers and send commands to other slave devices. The prior art works on the basis of an uncontrolled local "cause and effect", in which a smoke detector can set off the guidance devices in its vicinity without other parts of the system being involved. Such a set-up does not require any timestamping, scheduling or data gathering, as it is purely responsive. However, as the system control system 35 in this invention is contacted in all events, it benefits from scheduled and time-stamped data, which can be employed to perform co-ordinated lighting system wide responses. In particular, it can take account of site-wide personnel migration, so parts of escape routes can be changed to take this into account. It can also deal with second or more emergencies occurring simultaneously with a first, and in particular it can categorize them by severity and change escape routes accordingly. In such a situation emergencies may be detected by different systems, for example the fire and gas alarm 38 or the instrument control system 39, leading to contradictory requirements, and only a centralised system control means 35 can manage such a situation. Further, device failures can be detected, so again personnel can be routed around downed areas. A centralised control can also send mode of operation commands to devices far from the emergency, which reach them much faster than commands which ripple from one device to another as in the prior art. Another advantage is that there is only one instance of the software which controls the lighting system. In the prior art each device has to comprise quite extensive software so it can perform the functions of a controlling device. Given the complexity of the lighting system in this invention, if each device 4 had to be able to act as the system control means 35, that would involve an impractically high cost.

Having a central control structure also prevents failures in devices 4 in the field from being spread to other devices 4, and allows for a complete monitoring of the operation of the system. To improve the lighting system the system control means 35 is made redundant with a high SIL level. In addition, unlike in the prior art, the lighting system has a redundant power supply in the form of battery 7 so it will keep operating if part of all of the system suffers a power failure. As described elsewhere it is also programmed to perform particular pre-determined modes of operation in the event of power or communications losses.

The system control means 35 can control each device 4 separately, in order to perform real-time adaptable emergency routing as discussed above. As such, each device 4 has a unique identity in the system. Further, devices 4 can be clustered into zones, which can be operated according to zone-wide commands applicable equally to each device 4 therein. For example, entire areas can be switched off to conserve power. This zoning of devices 4 also allows for control protocols to be established for each zone, for example a zone of devices 4 in a particular critical area of a site can be programmed to react to commands from the fire and gas emergency system 38 to a greater degree than other zones in less critical areas.

The system control means 35 comprises a time sub-program which synchronises each device 4 according to a clock, so the displays 4 in a zone (or at least those which can be viewed at the same time from any point) perform their modes of operation in timed synchrony. This provides a unified and clear display, and prevents confusion. Further, where strobing forms a part of any mode of operation, it must be synchronised to have the desired effect. In effect, each device 4 has a synchronised clock which is a slave to the system control means clock, and the modes of operation are carried out according to that synchronised time. The scheduling structure of WirelessHART (RTM) lends itself to this arrangement. The time synchrony is also important where audio is played from the devices 4, as non-synchronous audio is very unclear or disconcerting.

Therefore, in use in the event of a detected emergency the devices 4 receive operational commands from the system control means 35, which determine the mode of operation. These commands are all part of a co-ordinated strategy determined by the system control means 35, and can involve guidance to personnel to move along escape routes which have been established, or to remain where they are. In addition, the lighting system can also be operated in various ways in non-emergency, or potential emergency situations by the system control means 35. For example, where maintenance crews are working on gas infrastructure in a particular area of a site there may be increased risk of gas leakage, and if so the system control means 35 can command devices 4 to issue a warning signal of some kind, which indicates the potential for gas leakage. Taking this a step further, in the event of the detection of a systems failure, or an operational parameter outside of the normal range, which could lead to a gas leak or explosion, once again the system control means 35 can be provided with this data, and command local devices 4 to issue a similar warning of the potential leak. Engineers can then move to safety, and contact the control room for further instructions. The warning can include the illumination of infrared or ultraviolet LEDs so escaped gas can be seen.

The device 4 may lose contact with the system control means 35 in use, and the control processor 16 is programmed to behave in a particular way should this happen. In particular, if the communications fail then the last instruction is maintained. However, if there are two communications sources then commands received from just one are adopted. There may be two sources of commands in a distributed system, for example from the system control means 35 which normally takes precedence, but also from a local fire and gas emergency system 38. So, if communication is lost with the system control means 35, and the device 4 is operating according to the third mode of operation, this mode of operation can be validated and maintained using data gathered from local fire and gas sensors 37. If these indicate a steady state then the stay put instruction can remain. If these indicate a change in conditions the device 4 can be changed to a default routing direction according to the first or second mode of operation, which follows a pre-determined escape route. Therefore, the advantageous command autonomy of the lighting system from other systems can be sacrificed in the event of communications failure.

The devices 4 in a lighting system will be positioned in most cases overhead, allowing for them to be readily seen by personnel. A direct line of sight to a device 4 will allow the animation to be seen clearly, but due to their simplicity the animations in the first to fourth modes of operation can also be clearly perceived through peripheral vision, or through unfocussed vision. This is of a significant advantage in an emergency, when swift movement through a building may be required, and when personnel may be alarmed. Coming from overhead the light emitted by the LEDs will be seen to move across all interior surfaces as they are illuminated in turn. The display therefore exists in free three dimensional space, and not just at the device 4. This is a significant advantage over illuminated signs, which have to be directly viewed to perceive their meaning. Being overhead means that the devices 4 are more likely to be obscured by smoke, however it has been found that beams of light emitted by LEDs can be greatly enhanced by smoke even when seen from grade (floor level). An overhead position also avoids obstructions, for example from personnel moving past a device 4.

A further point is that the KOGS 8 is autonomous to each device 4 in the lighting system, and the animation is not dispersed across a number of separate devices, as is the case in some known chaser conduit arrangements. As such, personnel only have to have a direct line of sight to one device 4 to appreciate the guidance. If the device 4 fails another will be very near by, by virtue of it being incorporated into the standard lighting, which results in a much higher frequency of displays than in known emergency escape route indication arrangements.

It will be appreciated that as the emergency light sector 10 is separate from the main light sector 5, the device 4 is a quasi non-maintained / sustained arrangement. In emergency lighting a non-maintained light comprises a single light which is only lit in an emergency. This is complementary to normal lighting. A maintained light comprises a single light which is lit normally and in an emergency, while a sustained light comprises two lights, one lit normally and the other in an emergency. Each arrangement has its advantages. With non-maintained there is a power saving, with maintained there is simplicity, and with sustained there is a level of redundancy. The device 4 benefits from the power saving of a non-maintained arrangement because the emergency light sector 10 is only illuminated in an emergency, and also from the redundancy advantage of a sustained arrangement.

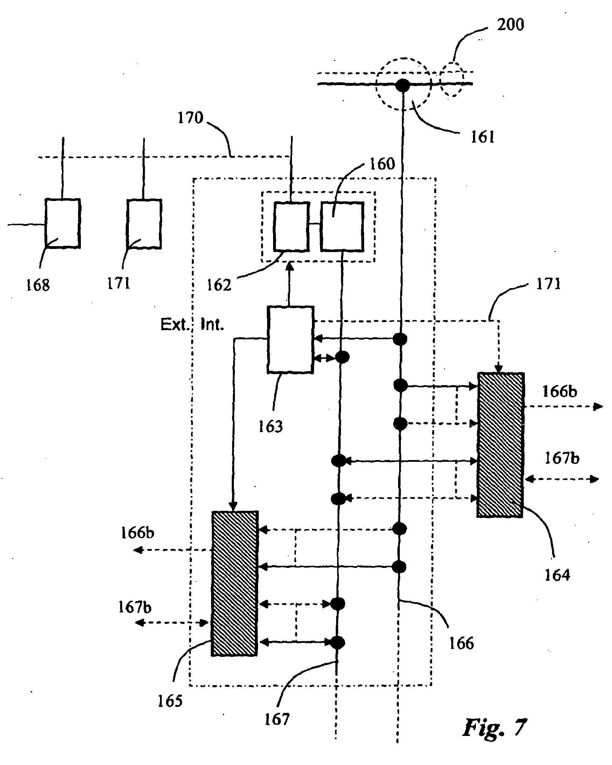

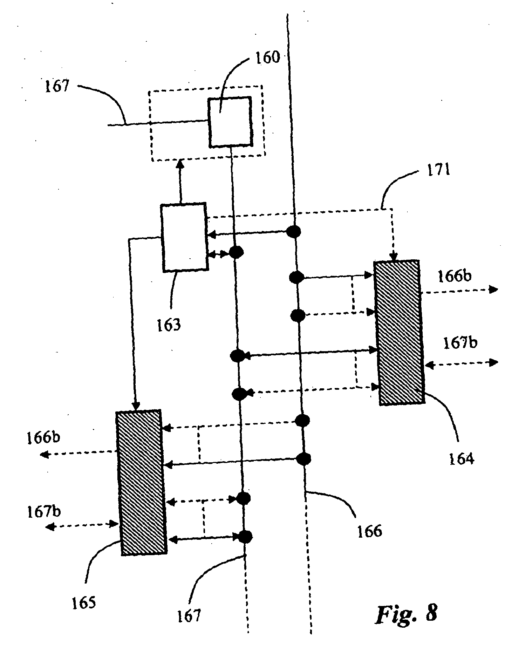

Figures 7 and 8 illustrate the power supply arrangement for the device 4 in the lighting system. It comprises a 110 or 230 V AC circuit 200, to which is connected, at 161, a circuit power bus 166. The various components of the device 4 are connected to the bus 166, including: the internal systems 165 of the device 4, as well as optionally external systems 164 (through the interface 14); the uninterruptable power supply 163, which comprises the battery 7 and a charger, data bus 167, which interfaces with the systems 165 and 164 and powers all the communications operations performed thereby; and radio transceiver 162 and its controller 160, which interface with a wireless gateway 168 and other wireless devices 171 via mesh 170. The data bus 167 is a serial RS485 bus. Both the power bus 166 and the data bus 167 can be repeated internally or externally, as shown at 166b and 167b. Figure 8 illustrates a slave device 28, such as a sensor, physically connected to the device 4. It is powered as above, but it receives data via cable 167.

The radio communications protocol employed by the device 4 is WirelessHART (RTM). However, it will be appreciated that it could be any known 2.4 GHz protocol, including WirelessHART (RTM), ISA100 (RTM), Zigbee (RTM), WIMI (RTM), WIFI (RTM) or MODBUS (RTM), or any other. It is a question of setting up the device 4 to integrate with the wider system with which it is to be used. It simply has to be able to mesh with the other participating wireless systems and devices, so it can send and receive data, and so it can act as a gateway to route TCP/IP, OPC, MODBUS or Fieldbus (IEC61158) data between instruments and the system control means 35. The wireless hardware and software may be in accordance with the IEEE802.15.4 standard, if desired. All these protocols and standards are known, and the manner in which they are implemented and operated will be readily apparent to the man skilled in the art, and as such they are not further described here.

WirelessHART (RTM) is used in the device 4 because it is an open system able to mesh with other control instrumentation, and it allows for communication with instrumented WirelessHART (RTM) gateways. It is also a non proprietary platform which provides a self organising, time stamped and unit identifiable virtual 3D map of participating devices in relation to each other and in approximate space. This is an important set of attributes that not all wireless systems possess. Furthermore, WirelessHART (RTM) allows for time stamping of all transmissions, which enhances a number of the functions the device 4 performs. In particular, and as described in more detail elsewhere, time stamping is used i) whenever personnel are identified or discerned by they RFID tag or through motion detection so an event trail can be recorded for post emergency evaluation; ii) whenever a command is sent to the device 4 to perform a particular mode of operation so past emergency activity is always known ; iii) whenever a failure occurs so a performance and maintenance history is established; and iv) whenever a non-emergency mode of use is changed so the lighting system can be monitored for energy usage and so on. Another advantage of WirelessHART (RTM) is that is has separate scheduled and unscheduled tasks. This is required where there may be an unscheduled transmission of data, as in this invention. WirelessHART (RTM) is normally scheduled, with the system control means sending requests for data. However, if an event occurs which requires data to be sent to the system control means 35 without such a request, this can be relayed. To implement the invention with all its various functions requires a gateway manager component which performs the scheduling and caching. The scheduling macro-cycle is very short to ensure important data can be relayed to the system control means 35 without any delays. (It should be noted that for device registration, configuration and diagnostics the device 4 has a FSK HART maintenance port. This is needed to provide the interoperability check mark for HART devices.)

The use of a wireless configuration allows the device 4 to communicate with other wireless components in its vicinity. This could involve receiving data from local sensors, such as a smoke detector, or it could involve transmitting data, for example to an audible alarm device. It could also involve communication with other devices 4 as part of a system wide guidance display strategy. The wireless capability also allows the device 4 to function as a communications gateway back to the system control means for non lighting or emergency instruments in non-emergency situations. It would act as a data tunnel, moat or repeater for such data, and would not have any direct influence over it other than connecting it to the system backbone 33. A further feature of wireless embedding is that if the link to the system control means is lost, the device 4 can mesh with other wireless devices to heal the problem. It is possible to use two different radio systems in one wireless device, so if one jams the other can be used. As described above, if all communications are lost the device 4 is programmed to display a default animation according to a pre-determined escape route, so it will still have a basic functionality. It also displays a fault signal to indicate that it has lost its communication link with the system control means 35, which can be an intermittent flashing of all the LEOs for example, as desired.

One particular use of the wireless functionality is to serve as a personnel location tracker. The control processor 16 is programmed to receive signals from RFID tags and to communicate location data back to the system control means 35. This allows the system control means 35 to determine the location of particular identifiable personnel on a site map. If a person is carrying a compatible wireless transmitter and/or receiver, which periodically or constantly transmits and/or receives signals, then the device 4 can detect this participating device with the antenna 18. Data can then be sent wirelessly back to the system control means 35 via the antenna 18 and a local wireless access, injection or master point, where it can be utilised for many different purposes. In a non emergency situation locating personnel has its benefits, but in an emergency situation it can be used to dictate the mode of operation strategy of the device 4, or of several such devices 4 in a lighting system. A person's location can be determined using just one device 4, because the location of the device 4 can be known, and because there are likely to be devices every 10 meters or less. Further, the detection range is set to not exceed more than 3 metres from the floor, to prevent an erroneous reading from another floor. However, a more exact location can also be determined by triangulation if two such devices 4 with known locations in a lighting system site map receive the signal from the RFID tag and communicate such to the system control means 35. (The triangulation is on an X-Y axis only because it is only necessary to locate personnel on a particular floor. Triangulation in three dimensional space is not required.) As the Wireless HART (RTM) system is being used for this function, all the data received and transmitted will be real time, self organised and time stamped and will have a unique address. This means it has a high data content and can be used effectively by the system control means to accurately track personnel through time and space. It also allows for a forensic trail to be established for post operational analysis. This is not possible in the prior art, in which RFID detection is not time stamped or scheduled.

The potential efficiency of this personnel location system is high because of the high frequency of the devices 4 on a site. They are located wherever there is a lighting requirement, which is everywhere there may be personnel. Further, the lighting coverage will also be dense, uniform and static, often in a 3D layered envelope, with known locations for each device 4, so the system will have a high degree of measured or inferred location detection accuracy, possibly to within a few meters. It is of course possible to perform the same personnel location function using the standard wirelessly operated instruments of a WirelessHART (RTM) infrastructure, but the irregular placement of such instruments on a site makes this impractical. Firstly, some areas of a site populated by personnel do not contain any such instruments. Further, wireless instruments are often found in clusters around inaccessible or unmanned areas, where personnel are not likely to be anyway.

Using the wireless capabilities of the device 4 to perform this RFID tag detection is superior to prior art arrangements, because of the duplicity in functionality. RFID tag detection in the prior art emergency guidance systems required an entirely separate wireless system in addition to the communications network between devices. However, device 4 uses the same wireless system to perform both functions, and therefore they share the same hardware and software. There is effectively a reduction in hardware interfaces, reducing the number of possible ignition sources and leakage paths, and making weight, and cost savings. This duplicity could create wireless interference, and there will be an increase in network traffic resulting in a reduction in the telegram macro cycle, however this can be resolved by increasing the capacity of the system if necessary.

The device 4 also comprises a passive infrared (PIR) presence detector 9. This detects movement in the vicinity of the device 4 without the need for the target to carry an electronic tagging device, and sends data to the control processor 16, which then transmits it to the system control means 35 via the wireless antenna 18. This is important because the detection data will therefore have a unique address and time stamp. As such, detection of movement in this way can be used to dictate the mode of operation strategy of the device 4, or of several such devices 4 in a lighting system. In particular, it can indicate that personnel are moving past a particular device 4 in a known location at a known time, so adherence by personnel to a particular emergency strategy can be checked in real time. This feature is simpler than the detection of RFID tags described above, as it merely detects movement and cannot discern the identity of particular personnel, but it serves as an advantageous additional, or backup feature thereto, in a quasi-redundancy set-up. One advantage it has over the detection of RFID tags is that it can detect personnel without them, such as intruders.

The device 4 comprises a number of advantageous diagnostic features. Firstly, it comprises optical sensors 3 which detect the operation of the LEDs in the main light sector 5, the KOGS 8, the beacons 11-13 and the emergency light sector 10. These are interfaced with the control processor 16 so diagnostic data on the performance of these components can be communicated back to the system control means 35. This is important because a software or hardware error could cause the animation of any of the modes of operation to be displayed incorrectly, which could be dangerous.

The optical sensors 3 are each locally positioned at the light sector in question, and have a line of sight to the LEDs therein. When the control processor 16 commands any of the LEDs of the device 4 to illuminate, the sensors 3 will feedback the result, be it confirmation or otherwise of correct illumination, or data on the light intensity to confirm or otherwise a correct dimmed illumination. Furthermore, each optical sensor 3 is adapted to its particular purpose. The optical sensors 3 in the KOGS 8 can detect the illumination of each separate one of the 16 LEDs therein, so it can confirm or otherwise that the mode of operation in question is being performed correctly. Further, the optical sensors 3 in the beacons 11-13 can detect the flash rate thereof. The manner in which the data from the optical sensors 3 is employed to discern diagnostic data will be apparent to the man skilled in the art. The sensors 3 may provide an absolute measurement, or a relative measurement against a reference, against another one of the LEDs, or against an ambient light sensor. The data from the sensors 3 may be processed as an analogue reading, a digital reading, an analogue to digital comparator reading (trip), or a window comparator reading, and the data can be acted upon by the control processor 16 and/or be sent back to the system control means 35 via the wireless antenna 18.

If the optical sensors 3 detect a light emission pattern divergent from the intended mode of operation, the control processor 16 operates the KOGS 8 according to a fifth mode of operation, which can indicate the fault. The visual display can be any of the above described animations which are not the same as those of the first to fourth modes of operation. The control processor 16 also sends a message to the system control means about the fault.

The control processor 16 is also programmed to perform functions as a part of a lighting system wide diagnostics protocol. In particular, the power source 20a is a duplex redundant power supply. This means if the main lighting system power supply fails, either at its source, or through a fault somewhere in the system, a second power supply in the form of the battery 7 will take its place to maintain system functions at the device 4. However, such an arrangement is only truly "redundant" if it is announced that the main power supply has flailed (or that the back-up power supply has failed), so it can be repaired. Therefore, the control processor 16 is programmed to monitor the power source 20a and the battery 7, and if either fail an alarm telegram is transmitted back to the system control means 35 via the wireless antenna 18. As each device 4 has a unique identity and a known location, the system control means 35 can determine the fault location and suitable repairs can be carried out. This is particularly useful in identifying the location of a cable break anywhere in the system, as it will be in the short span between two devices 4.

The control processor 16 is programmed to detect the following further faults and to report them via data telegram to the system control means 35: a cable fault (intermittent or irregular power and/or communications), a battery fault, including its actual charge, capacity and health; a battery charger fault (incorrect voltage or temperature); a fault in the power supply to the emergency light sector 10; the detection of water ingress; the detection of an over or under temperature; loss of radio contact; a fault in the loudspeaker; a fault in any auxiliary power supplied; a fault in the presence detector. These various diagnostic mechanisms are well known, so further detail of how they function is not provided here. It will be apparent to the man skilled in the art how to implement any of these features in the device 4 and the lighting system as a whole.

Further, as when a wireless signal is interrupted during an emergency situation, the control processor 16 can display a default animation according to a pre-determined escape route if the power supplies experience faults. Again, this can be an intermittent flashing of all the LEDs for example, as desired.

With regard to meeting the requirements for hazardous area safety, the device 4 is configured according the requirements of the site in which it is used. It will be appreciated that in this industry most infrastructure of this kind is bespoke, so the device 4 can be made to meet any requirement. There are many different levels of certification, and the different ways in which the device 4, and its components are configured to meet them are all known, and are therefore not further described herein in great detail. However, according to requirements, these can include: Encapsulation; Ex ma and/or Ex mb, Increased Safety; Ex e, with optional IP30 protection (where an enclosure lid may be opened), Intrinsically safe; Ex ia and/or Ex ib and/or Ex ic. Some components may require flame-proof protection Ex d. If there is an enclosure it can protected to a minimum of IP54 or IP66, with the option of IP68 (ingress protection in accordance with the EN60529 standard or the equivalent), so it can be suitable for outdoor use. The battery 17 may be protected in accordance with Increased safety requirements [Ex e], and/or in accordance with intrinsically safe requirements [Ex i] and/or any other method. Ideally, where power 20a is isolated, the battery and battery connection may be suitable for Zone 0.

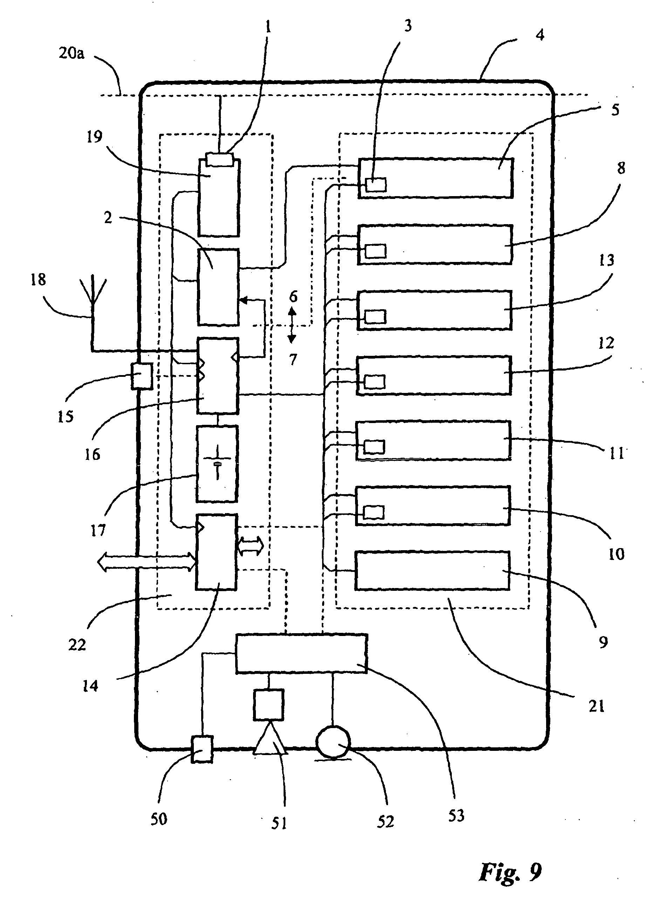

Figure 9 shows a second embodiment of the invention, in which an audio feature is included. Figure 9 has the same reference numerals as used above for like features. Audio player means 53 is included in the device 4, which comprises pre-recorded digital messages which can be transmitted to the vicinity of the device through loudspeaker 51. It also comprises the ability to transmit audio which is received in use by the control processor 16 via the wireless antenna 18. In addition, there is also provided a receiver 50, which can receive radio signals, which can also be transmitted through the loudspeaker 51. In addition, a microphone 52 is connected to the audio player means 53. Therefore, the system control means 35 can send commands to the device 4 to either play a recorded message or to play a message which has been sent. Transmitted audio can use the VOIP protocol, which WirelessHART (RTM) is capable of handling, although it is power hungry. The control processor 16 converts the data into audio, which is buffered or cached for seamless transmission. In addition, if it comprises a radio transmitter, the system control means 35 can also send audio through that medium for transmission. Further, two-way audio transmission from the device 4 can be performed using the microphone 52, again using the VOIP protocol. The control processor 16 converts the received audio in a stream for transmission to the system control means 35. The microphone 52 is also used to test the transmission of audio from the loudspeaker 35. This diagnostic data is transmitted back to the system control means 35 to confirm the correct operation of the device 4. The microphone 52 can also be configured to detect ambient noise, and if there is a divergence from normal ambient noise this can be sent to the system control means 35 as an alarm.

In an extension of the embodiment shown in Figure 9, RFID tags carried by personnel can comprise a transceiver, so audio can be sent from the tag to the wireless antenna 8, where it can be converted to VOIP by the control processor 16 and sent to the system control means 35. Further to this, RFID tags carried by personnel can also comprise other sensors which can send data to the device 4 in a similar way for onward transmission to the system control means 35. These include biometrics, accelerometers, altimeters, wind direction detection and smoke, fire or gas detectors. Such an arrangement is better than the use of fixed position detectors, because personnel may move into the proximity of an emergency. Furthermore, the RFID tag comprises a loudspeaker and transmits alarms and messages sent to it from the device 4 via the antenna 18.

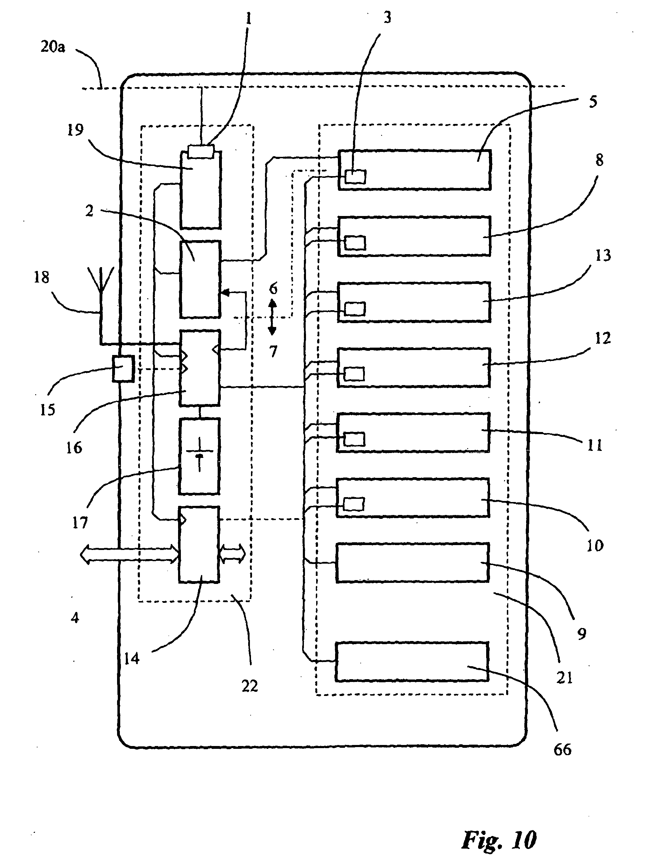

Figure 10 shows a third embodiment of the invention, in which an optical receiver / transmitter 66 is included. Figure 10 has the same reference numerals as used above for like features. WirelessHART (RTM) is not designed for locating roaming RFID tags, because it may take time for such a tag to joint a network as it passes through space. At a fast walking pace, or running in an emergency, the latency may be too long to accurately track the position of the tag. The embodiment shown in Figure 10 overcomes this possible problem by including the optical device 66 which detects personnel tags transmitting infrared codes. These can be unique to the tag, or universal to all or groups of personnel. The tag transmits the code at a cyclic rate of once every 200ms, with a range of 3 meters. This can be recognised by the optical device 66 at a fast running pace. The received code will be sent back to the system control means 35 for use in personnel tracking in the manner described above.

The optical receiver / transmitter 66 can also send out a repeated pulse to activate local tags in order to detect them. This mode of operation may be preferred as less power is required at each tag. It may also be used in conjunction with tag transmission to provide a level of redundancy in the system. If so desired, the control processor 16 can also be programmed to send out a pulse only when movement is detected by the passive infrared (PIR) presence detector 9, which is more power efficient that sending out a constant pulse.

The KOGS 8, the device 4, and the lighting system of which it forms a part, can be altered without departing from the scope of claims 1, 9 and 15 respectively. With complex systems of this kind there are often many alternative technical solutions to those described above which perform the same, or similar functions. Each of the alternatives described below, as well as other technical alternatives which form a part of the common general knowledge of the person skilled in the art, are included within the scope of the three aspects of the invention.

In alternative embodiments (not shown), devices like device 4 further comprise additional analogue and digital serial and parallel communication ports. In one version a device has three digital inputs, from three switches used for fire, gas and SOS manual alarms. Operation of these is either acted upon by the device and/or communicated back to a system control means.

In further alternative embodiments (not shown) devices like device 4 use different communications protocols other than WirelessHART (RTM). For example, in one embodiment the device is connected to an RS485 serial interface which runs according to the MODBUS (RTM) protocol. It functions as a slave with regard to instructions it receives from the system control means, but it functions as a master when transmitting or repeating data to other devices.

In further alternative embodiments (not shown) devices like device 4 further comprises one or more parallel KOGS of different colours, which can be operated independently of the main green KOGS. These separate systems operate in the same way as the main KOGS, but are used to direct different kinds of personnel in different directions, for example staff away from a fire and emergency crews towards it. These independent KOGS can comprise separate sets of LEDs, but they can also comprise the same LEDs as the main KOGS, if these are capable of emitting a plurality of colours. With these configurations the optical sensors can detect the illumination of different colours, so they can confirm or otherwise that the correct colour and intensity is being used.

In further alternative embodiments (not shown) a single set of tri-colour LEDs is provided, which performs all the different lighting functions of the device, using all the different colours available. This in effect creates a basic universal display.

In further alternative embodiments (not shown) devices like device 4 comprise KOGS with a different number of LEDs in a line. These other embodiments include KOGS with 3, 4, 5, 6, 7, 8, 9, 10, 11, 12, 13, 14, 15 or 17 or more LEDs, which all function in the same way as KOGS 8 described above.

In further alternative embodiments (not shown) devices like device 4 further comprise a parallel audible guidance system which can work alongside the KOGS. When each LED of the KOGS is illuminated a positioned speaker can emit an audible sound, such that the sound seems to move through space in a particular direction. The speakers are spaced apart further than the LEDs of the KOGS to make this work, and the sounds are 'point detectable' in 3D space, which is achieved using different frequency ranges, or white or pink noise. In one embodiment the audible guidance system is incorporated into the device, while in others the device provides commands for an associated audible guidance system connected thereto via the wireless or physical interface thereof.

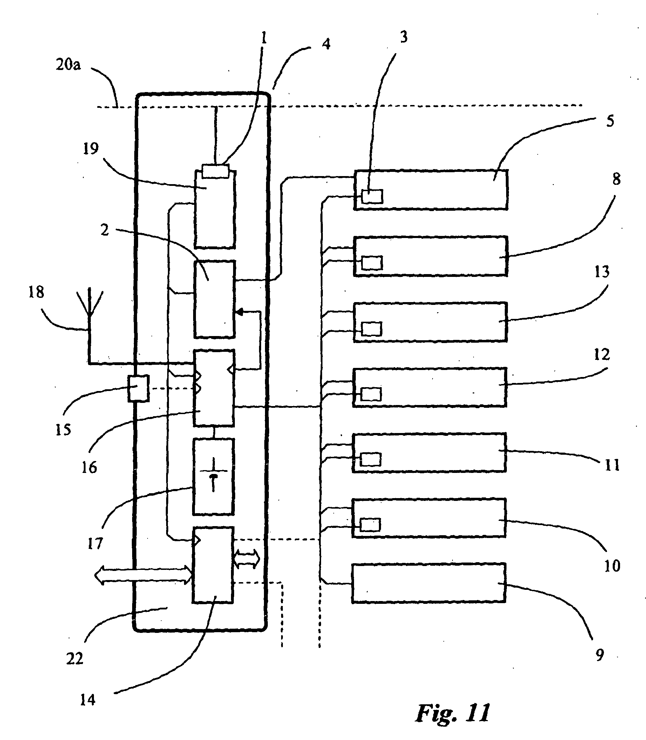

In further alternative embodiments (not shown) the various lighting parts of a device can be external thereto as opposed to being housed in the same enclosure. For example, in a Zone 0 environment such as inside a tank or vessel, the various lighting parts of the device can be extended into that tank or vessel. Such an arrangement is illustrated in Figure 11.

In further alternative embodiments (not shown) the device is rendered Intrinsically Safe for Zone 0 by comprising a suitably rated explosion proof enclosure, as opposed to being supplied by an Intrinsically Safe power supply. However, this suffers the disadvantage that it is not repairable.

In further alternative embodiments (not shown) the emergency light sectors comprise ultraviolet and/or infrared LEDs, which allow for the highlighting of fluorescing objects or signs nearby, or for IR sensitive cameras to operate in the vicinity.

In further alternative embodiments (not shown) other methods are used to provide for communications into and out of the device, including line of sight optical transmissions, ultrasonic, or piped ultrasonic or acoustic transmissions, or via the power supply cable, for example a Cat5e cable. The power supply is modulated for this to function.

In a further alternative embodiments (not shown) devices comprise visual recording means such as a CCTV camera and a UV and/or Infrared camera. The recorded images are sent to the system control means for user evaluation.

In further alternative embodiments (not shown) the motion detector 9 of device 4 is replaced with alternative technologies, including a presence detector. Further, in other alternative embodiments (not shown) the personnel tag identification technology is optical, ultrasonic, laser, radar or camera based.

In one further alternative embedment (not shown) the lenses over the LEDs of the KOGS each comprise a plurality of sectors, each of which projects light emitted by said light point at a different angle. A main one of the sectors emits a main beam, while the others emit secondary beams of a lower light intensity. With this arrangement the main beam of light can still have a strong intensity, but the LED can be viewed from a wider angle than before.

In further alternative embodiments (not shown) other light means are used, such as light bulbs, mercury vapour lighting, fluorescent tubes or xenon lights.

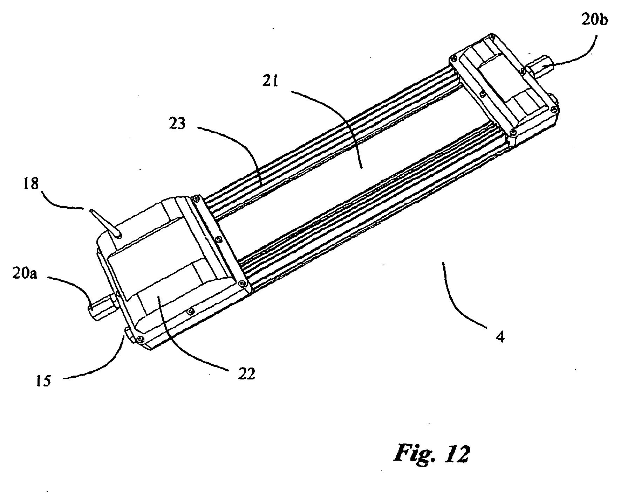

In one further alternative embodiment the cable gland entry for the power source 20a cable, and the other 20b for through power are arranged at opposite ends of the device 4, to make stacking of the devices 4 easier. Such an arrangement is illustrated in Figure 12.

Therefore, an emergency guidance system is provided which incorporates an animated stay-put instruction. This finds particular application in isolated sites like an off-shore platform, on a ship or in a complex industrial facility, where continuous movement of personnel in an emergency is not appropriate. Further, the invention provides a multi-function lighting device which incorporates such an emergency guidance system with the various other lighting requirements which are mandatory in such industrial settings. Furthermore, the invention also provides a lighting system incorporating a plurality of such multi-function lighting devices. The incorporation of the emergency guidance display into a multi-function lighting device, and the use of such devices in a lighting system provides a host of advantageous features, which are all explained above.

## Claims

1. An emergency guidance display (8, 16) comprising three or more light points (8) arranged in a line and a control means (16) wherein the control means (16) illuminates said light points (8) sequentially from one end of the line to the other in a first mode of operation and sequentially in the opposite direction in a second mode of operation, **characterised in that** said light points (8) comprise two groups, and in which the control means (16) illuminates the light points (8) of each group sequentially along said line in opposite directions in a third mode of operation.

2. An emergency guidance display (8, 16) as claimed in claim 1 in which the control means (16) illuminates the light points (8) of each group sequentially along said line in the reverse opposite directions in a fourth mode of operation.

3. An emergency guidance display (8, 16) as claimed in claim 2 in which said light points (8) each comprise a separate lens.

4. An emergency guidance display (8, 16) as claimed in claim 1 in which said light points (8) comprise a first colour, in which either said light points (8) comprise one or more second colours or said display (8, 16) comprises a one or more second sets of light points comprising second colours, in which in a first mode category the control means (16) illuminates said light points (8) in the first colour, and in which in one or more second mode categories the control means (16) either illuminates said light points (8) in second colours or illuminates said second sets of light points.

5. An emergency guidance display (8, 16) as claimed in claim 1 in which the display (8, 16) comprises first optical sensor means (3) adapted to separately detect the emission of light from two or more of said light points (8), and in which if said first optical sensor means (3) detects a light emission pattern divergent from the mode of operation of the control means(16), the control means (16) operates said light points (8) according to a fifth mode of operation.

6. An emergency guidance display (8, 16) as claimed in claim 1 in which the display (8, 16) comprises a main power supply (20a) and a backup power supply (17), and in which said backup power supply (17)is an uninterruptable power supply charged by said main power supply (20a).

7. A multi-function lighting device (4) comprising a main light emitting means (5), an emergency light emitting means (10), an emergency warning light emitting means (11-13) and an emergency guidance display (8, 16) as claimed in any of claims 1 to 6.

8. A multi-function lighting device (4) as claimed in claim 7 in which the multi-function lighting device (4) further comprises second optical sensor means (3) which detect the emission of light from said main light emitting means (5), said emergency lighting emitting means (10) and said emergency warning light emitting means (11-13).

9. A multi function lighting device (4) as claimed in claim 7 in which the multi-function lighting device (4) comprises a wireless communications interface (18).

10. A multi-function lighting device (4) as claimed in claim 7 in which the light points (8) of the emergency guidance display (8, 16) are separate from said main light emitting means (5), said emergency light emitting means (10) and said emergency warning light emitting means (11-13).

11. A multi-function lighting device (4) as claimed in claim 7 in which the light points (8) of the emergency guidance display (8, 16) comprise light points of said main light emitting means (5) and/or said emergency light emitting means (10) and/or said emergency warning light emitting means (11-13).

12. A lighting system comprising a power supply, a power circuit (30), a system control means (35), a communications circuit (25) comprising a plurality of radio transceivers (26, 27), and a plurality of multi-function lighting devices (4) as claimed in any of claims 7 to 11, in which the plurality of multi-function lighting devices (4) are connected to said power circuit (30), and in which each multi-function lighting device (4) is connectable wirelessly to the communications circuit (25) via a radio transceiver (26, 27).

13. A lighting system as claimed in claim 12 in which the communications circuit (25) further comprises one or more wired sections (31), and in which one or more multi-function lighting devices (4) are connected to said system control means (35) and/or to other multi-function lighting devices (4) via one of said one or more wired sections.

14. A lighting system as claimed in claim 12 which further comprises a plurality of personnel tags, in which each multi-function lighting device (4) comprises a unique identity and a tag identification means (66), in which said system control means (35) comprises a site map comprising known locations for each unique multi-function lighting device identity, and in which identification of personnel tags by said tag identification means (66) is communicated to the system control means (35) in order to locate said personnel tag on said site map.

15. A lighting system as claimed in claim 14 in which each multi-function lighting device (4) comprises a motion detection means (9), and in which detection of motion by said motion detection means (9) is communicated to the system control means (35) in order to locate moving personnel on said site map.

## Patentansprüche

1. Notfall-Führungsanzeige (8, 16), umfassend drei oder mehr in einer Linie angeordnete Lichtpunkte (8) und eine Steuervorrichtung (16), wobei die Steuervorrichtung (16) die Lichtpunkte (8) in einem ersten Betriebsmodus sequentiell von einem Ende der Linie zum anderen und in einem zweiten Betriebsmodus sequentiell in der entgegengesetzten Richtung illuminiert, **dadurch gekennzeichnet, dass** die Lichtpunkte (8) zwei Gruppen umfassen, wobei die Steuervorrichtung (16) die Lichtpunkte (8) von jeder Gruppe in einem dritten Betriebsmodus sequentiell entlang der Linie in entgegengesetzten Richtungen illuminiert.

2. Notfall-Führungsanzeige (8, 16) nach Anspruch 1, wobei die Steuervorrichtung (16) die Lichtpunkte (8) jeder Gruppe in einem vierten Betriebsmodus sequentiell längs der Linie rückwärts zu den entgegengesetzten Richtungen illuminiert.

3. Notfall-Führungsanzeige (8, 16) nach Anspruch 2, wobei die Lichtpunkte (8) jeweils eine separate Linse aufweisen.

4. Notfall-Führungsanzeige (8, 16) nach Anspruch 1, wobei die Lichtpunkte (8) eine erste Farbe aufweisen, wobei entweder die Lichtpunkte (8) eine oder mehrere zweite Farben oder die Anzeige (8, 16) eine oder mehrere zweite Sets von Lichtpunkten mit einer zweiten Farbe aufweisen, wobei in einer ersten Betriebsmodus-Kategorie die Steuervorrichtung (16) die Lichtpunkte (8) in der ersten Farbe illuminiert, und wobei in einer oder mehreren zweiten Betriebsmodus-Kategorien die Steuervorrichtung (16) entweder die Lichtpunkte (8) in der zweiten Farbe illuminiert oder das zweite Set von Lichtpunkten illuminiert.

5. Notfall-Führungsanzeige (8, 16) nach Anspruch 1, wobei die Anzeige (8, 16) eine erste optische Sensorvorrichtung (3) aufweist, welche angepasst ist, um die Emission von Licht aus zwei oder mehr der Lichtpunkte (8) separat zu erfassen, und wobei, wenn die erste optische Sensorvorrichtung (3) ein von dem Betriebsmodus der Steuervorrichtung (16) abweichendes Lichtemissionsmuster erfasst, die Steuervorrichtung (16) die Lichtpunkte (8) nach einem fünften Betriebsmodus betreibt.

6. Notfall-Führungsanzeige (8, 16) nach Anspruch 1, wobei die Anzeige (8, 16) eine Hauptstromversorgung (20a) und eine Reservestromversorgung (17) umfasst, und wobei die Reservestromversorgung (17) eine durch die Hauptstromversorgung (20a) aufgeladene unterbrechungsfreie Stromversorgung ist.

7. Multifunktions-Beleuchtungsvorrichtung (4) umfassend eine Hauptlichtemissionsvorrichtung (5), eine Notlichtemissionsvorrichtung (10), eine Notfallwarnlichtemissionsvorrichtung (11-13) und eine Notfall-Führungsanzeige (8, 16) nach einem der Ansprüche 1 bis 6.

8. Multifunktions-Beleuchtungsvorrichtung (4) nach Anspruch 7, wobei die Multifunktions-Beleuchtungsvorrichtung (4) ferner eine zweite optische Sensorvorrichtung (3) aufweist, welche die Emission von Licht von der Hauptlichtemissionsvorrichtung (5), der Notlichtemissionsvorrichtung (10) und der Notfallwarnlichtemissionsvorrichtung (11-13) erfasst.

9. Multifunktions-Beleuchtungsvorrichtung (4) nach Anspruch 7, wobei die Multifunktions-Beleuchtungsvorrichtung (4) eine drahtlose Kommunikationsschnittstelle (18) umfasst.

10. Multifunktions-Beleuchtungsvorrichtung (4) nach Anspruch 7, wobei die Lichtpunkte (8) der Notfall-Führungsanzeige (8, 16) getrennt sind von der Hauptlichtemissionsvorrichtung (5), der Notlichtemissionsvorrichtung (10) und der Notfallwarnlichtemissionsvorrichtung (11-13).

11. Multifunktions-Beleuchtungsvorrichtung (4) nach Anspruch 7, wobei die Lichtpunkte (8) der Notfall-Führungsanzeige (8, 16) Lichtpunkte der Hauptlichtemissionsvorrichtung (5) und/oder der Notlichtemissionsvorrichtung (10) und/oder der Notfallwarnlichtemissionsvorrichtung (11-13) umfassen.

12. Beleuchtungssystem umfassend eine Stromversorgung, einen Stromkreis (30), eine Systemsteuervorrichtung (35), eine Kommunikationsschaltung (25) mit einer Vielzahl von Funksendeempfängern (26, 27) und eine Vielzahl von Multifunktions-Beleuchtungsvorrichtungen (4) nach einem der Ansprüche 7 bis 11, wobei die Vielzahl von Multifunktions-Beleuchtungsvorrichtungen (4) mit dem Stromkreis (30) verbunden sind, und wobei jede Multifunktions-Beleuchtungsvorrichtung (4) drahtlos mit der Kommunikationsschaltung (25) über einen Funksendeempfänger (26, 27) verbindbar ist.

13. Beleuchtungssystem nach Anspruch 12, wobei die Kommunikationsschaltung (25) ferner eine oder mehrere verdrahtete Abschnitte (31) aufweist, und wobei eine oder mehrere Multifunktions-Beleuchtungsvorrichtungen (4) mit der Systemsteuervorrichtung (35) und/oder mit anderen Multifunktions-Beleuchtungsvorrichtungen (4) über den einen oder einen der mehreren verdrahteten Abschnitte verbunden sind.

14. Beleuchtungssystem nach Anspruch 12, ferner umfassend eine Vielzahl von Personal-Kennungen, wobei jede Multifunktions-Beleuchtungsvorrichtung (4) eine einzigartige Identität und ein Kennungs-Identifikationsmittel (66) umfasst, wobei die Systemsteuervorrichtung (35) einen Lageplan mit bekannten Orten von jeder einzigartigen Multifunktions-Beleuchtungsvorrichtungsidentität aufweist, und wobei die Identifizierung von Personal-Kennungen durch das Kennungs-Identifikationsmittel (66) an die Systemsteuervorrichtung (35) kommuniziert wird, um die Personal-Kennungen auf dem Lageplan zu lokalisieren.

15. Beleuchtungssystem nach Anspruch 14, wobei jede Multifunktions-Beleuchtungsvorrichtung (4) eine Bewegungserfassungsvorrichtung (9) umfasst, und wobei die Erfassung einer Bewegung durch die Bewegungserfassungsvorrichtung (9) an die Systemsteuervorrichtung (35) kommuniziert wird, um sich bewegendes Personal auf dem Lageplan zu lokalisieren.

## Revendications

1. Dispositif d'affichage pour guidage en situation d'urgence (8, 16), comportant trois ou plus de trois points lumineux (8) disposés en ligne et un moyen de commande (16), le moyen de commande (16), dans un premier mode de fonctionnement, allumant successivement lesdits points lumineux (8) d'une extrémité de la ligne à l'autre et, dans un deuxième mode de fonctionnement, successivement en sens inverse, **caractérisé en ce que** lesdits points lumineux (8) comprennent deux groupes et, dans un troisième mode de fonctionnement, le moyen de commande (16) allumant successivement les points lumineux (8) de chaque groupe dans des sens opposés sur ladite ligne.

2. Dispositif d'affichage pour guidage en situation d'urgence (8, 16) selon la revendication 1, dans lequel, dans un quatrième mode de fonctionnement, le moyen de commande (16) allume successivement les points lumineux (8) de chaque groupe dans les sens opposés sur ladite ligne.

3. Dispositif d'affichage pour guidage en situation d'urgence (8, 16) selon la revendication 2, dans lequel lesdits points lumineux (8) comprennent chacun une lentille séparée.

4. Dispositif d'affichage pour guidage en situation d'urgence (8, 16) selon la revendication 1, dans lequel lesdits points lumineux (8) comprennent une première couleur, soit lesdits points lumineux (8) comprenant une ou plusieurs deuxième(s) couleur(s), soit ledit dispositif d'affichage (8, 16) comprenant un ou plusieurs deuxième(s) ensemble(s) de points lumineux comprenant des deuxièmes couleurs, le moyen de commande (16), dans une première catégorie de modes, allumant lesdits points lumineux (8) avec la première couleur, et le moyen de commande (16), dans une ou plusieurs seconde(s) catégorie(s) de modes, allumant lesdits points lumineux (8) avec des deuxièmes couleurs ou allumant lesdits deuxièmes ensembles de points lumineux.

5. Dispositif d'affichage pour guidage en situation d'urgence (8, 16) selon la revendication 1, le dispositif d'affichage (8, 16) comportant des premiers moyens formant capteurs optiques (3) conçus pour détecter séparément l'émission de lumière par deux ou plus de deux desdits points lumineux (8) et, si lesdits premiers moyens formant capteurs optiques (3) détectent une combinaison d'émissions lumineuses qui diverge par rapport au mode de fonctionnement du moyen de commande (16), le moyen de commande (16) faisant fonctionner lesdits points lumineux (8) selon un cinquième mode de fonctionnement.

6. Dispositif d'affichage pour guidage en situation d'urgence (8, 16) selon la revendication 1, le dispositif d'affichage (8, 16) comportant une alimentation électrique principale (20a) et une alimentation électrique de secours (17), et ladite alimentation électrique de secours (17) étant une alimentation électrique non interruptible chargée par ladite alimentation électrique principale (20a).

7. Dispositif d'éclairage multifonction (4) comportant un moyen luminescent principal (5), un moyen luminescent pour situation d'urgence (10), un moyen d'alerte luminescent pour situation d'urgence (11 à 13) et un dispositif d'affichage pour guidage en situation d'urgence (8, 16) selon l'une quelconque des revendications 1 à 6.

8. Dispositif d'éclairage multifonction (4) selon la revendication 7, le dispositif d'éclairage multifonction (4) comportant en outre des seconds moyens formant capteurs optiques (3) qui détectent l'émission de lumière par ledit moyen luminescent principal (5), ledit moyen luminescent pour situation d'urgence (10) et ledit moyen d'alerte luminescent pour situation d'urgence (11 à 13).

9. Dispositif d'éclairage multifonction (4) selon la revendication 7, le dispositif d'éclairage multifonction (4) comportant une interface (18) pour des communications radioélectriques.

10. Dispositif d'éclairage multifonction (4) selon la revendication 7, dans lequel les points lumineux (8) du dispositif d'affichage pour guidage en situation d'urgence (8, 16) sont séparés dudit moyen luminescent principal (5), dudit moyen luminescent pour situation d'urgence (10) et dudit moyen d'alerte luminescent pour situation d'urgence (11 à 13).

11. Dispositif d'éclairage multifonction (4) selon la revendication 7, dans lequel les points lumineux (8) du dispositif d'affichage pour guidage en situation d'urgence (8, 16) comprennent des points lumineux dudit moyen luminescent principal (5) et/ou dudit moyen luminescent pour situation d'urgence (10) et/ou dudit moyen d'alerte luminescent pour situation d'urgence (11 à 13).

12. Système d'éclairage comportant une source d'électricité, un circuit d'alimentation électrique (30), un moyen de commande (35) de système, un circuit de communication (25) comprenant une pluralité d'émetteurs-récepteurs radio (26, 27) et une pluralité de dispositifs d'éclairage multifonction (4) selon l'une quelconque des revendications 7 à 11, la pluralité de dispositifs d'éclairage multifonction (4) étant connectés audit circuit d'alimentation électrique (30), et chaque pluralité de dispositifs d'éclairage multifonction (4) pouvant être connectée par voie radioélectrique au circuit de communication (25) par l'intermédiaire d'un émetteur-récepteur radio (26, 27).

13. Système d'éclairage selon la revendication 12, dans lequel le circuit de communication (25) comprend un ou plusieurs segments câblés (31), et dans lequel un ou plusieurs dispositifs d'éclairage multifonction (4) est/sont connecté(s) audit moyen de commande (35) de système et/ou à d'autres dispositifs d'éclairage multifonction (4) par l'intermédiaire dudit/desdits segment(s) câblé(s).

14. Système d'éclairage selon la revendication 12, comportant en outre une pluralité d'étiquettes de personnel, chaque dispositif d'éclairage multifonction (4) comprenant une identité exclusive et un moyen d'identification (66) d'étiquette, ledit moyen de commande (35) de système comprenant un plan du site indiquant des emplacements connus pour chaque identité exclusive de dispositif d'éclairage multifonction, et l'identification d'étiquettes de personnel par ledit moyen d'identification (66) de personnel étant communiquée au moyen de commande (35) de système afin de localiser ladite étiquette de personnel sur ledit plan du site.

15. Système d'éclairage selon la revendication 14, dans lequel chaque dispositif d'éclairage multifonction (4) comprend un moyen de détection de mouvement (9), et dans lequel une détection de mouvement par ledit moyen de détection de mouvement (9) est communiquée au moyen de commande (35) de système afin de localiser sur ledit plan du site le personnel en train de se déplacer.
